# EUROPEAN PATENT APPLICATION

(11) **EP 4 697 527 A1**
(43) Date of publication of application: **18.02.2026**
(21) Application number: 24791879.0
(22) Date of filing: 09.04.2024
(51) Int. Cl.: H01R 35/00, H01R 13/72, H01R 13/629

(54) **ROTATING CONDUCTIVE APPARATUS AND POWER SOCKET**

(30) Priority: 18.04.2023 CN 202310414285
(71) Applicant: Jiangxi Risheng Precision Hardware Co., Ltd., Yingtan, Jiangxi 335400 (CN)
(72) Inventor: ZHAO, Linqiang, Dongguan, Guangdong 523000 (CN)
(74) Representative: Valet Patent Services Limited
(86) International application number: PCT/CN2024/086722
(87) International publication number: WO 2024/217294

(57) **Abstract**

Disclosed in the present invention are a rotating conductive apparatus and a power socket. The rotating conductive apparatus comprises a conductive assembly, an elastic apparatus, a position limiting apparatus and a wire, the conductive assembly comprising a conductive shaft, a conductive carrier and a conductive base. A current first flows through the conductive base, the conductive base then electrifies the conductive shaft, the conductive shaft then transmits the current to the conductive carrier, and the conductive carrier can rotate around the conductive shaft. The wire is electrically connected to the conductive carrier, the wire rotates around the conductive shaft by means of the conductive carrier to achieve winding, and the conductive carrier can stably input and output the current to the wire. The elastic apparatus is responsible for winding the wire, and the position limiting apparatus is responsible for limiting the length of the wire drawn out. Compared with structures of follow-up circuit boards and conductive plates, the structural hardness of the conductive shaft is higher than that of a fixed circuit board, and the bearable contact friction force between the conductive shaft and the conductive carrier is greater than the bearable contact friction force between a circular conductive rail and a metal contact member, thereby effectively prolonging service life of products.

## Description

### TECHNICAL FIELD

The present invention belongs to the technical field of conductive devices, and particularly relates to a rotating conductive apparatus and a power socket.

### BACKGROUND

A rotating conductive device is a product capable of guaranteeing continuous current input and output while rotating, and common rotating conductive products include retractable data cables and retractable power cords. With the continuous improvement in living standards, people often carry electronic products such as mobile phones and laptops when going out. In order to facilitate charging, people usually need to carry corresponding data cables. At present, traditional data cables are generally long and linear, which makes them prone to tangling or even knotting. In order to solve the problem, retractable data cables have emerged on the market. In addition, when an electric hot pot is used in daily life, an external power strip is often required. When one power strip is not long enough, a second power strip needs to be connected. Therefore, a retractable power strip has also appeared on the market. At present, two main types of retractable data cables are available on the market: bidirectional retractable data cables and unidirectional retractable data cables. For example, the Chinese Patent (Application No.: 202011011557.7) discloses a bidirectional retractable charging cable, where one end of the cable is provided with a USB connector, and the other end of the cable is provided with a Type-C or a micro connector. When charging, it is only necessary to plug the USB connector into a power source, a stable current will flow to the Type-C or the micro connector. However, a rotating drum in a middle only functions as a cord reel mechanism, but cannot provide stable current input and output. Another example is the Chinese Patent (Application No.: 202121700984.6), which discloses a unidirectional free-pulling data cable. Unlike the bidirectional retractable data cable, the unidirectional retractable cable needs to ensure stable current input and output while the cable is being stretched. Therefore, the patent adopts a structure design involving a follow-up circuit board and a fixed conductive board, a current first flows through the fixed conductive board and then connects to circular conductive rails via metal contacts on the follow-up circuit board, the follow-up circuit board conducts current to the wire. However, the circular conductive rails wear due to friction between the metal contacts and the circular conductive rails, leading to poor conductivity and short service life over time.

Therefore, there is an urgent need to develop rotating conductive technology that can provide stable current input and output while allowing cable retraction, and that can also effectively prolong service life of the product.

### SUMMARY

In order to solve the above problems, the present invention provides a rotating conductive apparatus and a power socket.

The technical solution of the present invention is as follows:
a rotating conductive apparatus, including:
a conductive assembly, where the conductive assembly includes a conductive shaft, a conductive carrier and a conductive base, one end of the conductive shaft is fixedly connected to the conductive base, the conductive carrier is rotatably mounted on the conductive shaft, and the conductive carrier is electrically connected to the conductive shaft;
an elastic apparatus, where the elastic apparatus is connected to the conductive base, and the elastic apparatus is snap-fitted on one end of the conductive carrier;
a position limiting apparatus, where the other end of the conductive shaft is connected to the position limiting apparatus, and the position limiting apparatus is snap-fitted on the other end of the conductive carrier; and
a wire, where one end portion of the wire is electrically connected to the conductive carrier, the wire is wound around the conductive carrier, and the wire is located between the elastic apparatus and the position limiting apparatus.

Further, the rotating conductive apparatus also includes a clamping ring, where the clamping ring is detachably mounted on the conductive carrier, the clamping ring is provided with a clamping block, a groove is formed on the conductive carrier, and the clamping block is snap-fitted in the groove.

Further, the conductive shaft includes a plurality of conductive members and an insulating shaft, one end of each of the plurality of conductive members is disposed at intervals in an axial direction of the insulating shaft, and the other end of each of the plurality of conductive members penetrates into a shaft core of the insulating shaft and extends axially to a tail end of the insulating shaft; the conductive carrier includes a plurality of electrical lead-out members and an insulating carrier, the plurality of electrical lead-out members are disposed at intervals in an axial direction of the insulating carrier, and each electrical lead-out member is in electrical contact with one corresponding conductive member; a plurality of symmetrical slots are formed on the insulating carrier, each electrical lead-out member is disposed in one corresponding symmetrical slot, the symmetrical slot divides the electrical lead-out member into an inner contact portion and an outer contact portion, the inner contact portion is located on an inner wall of the insulating carrier, the inner contact portion is in electrical contact with the conductive member, the outer contact portion is located on an outer wall of the insulating carrier, and the end portion of the wire is electrically connected to the outer contact portion.

Further, the conductive base is provided with a plurality of conductive through holes, each of the conductive through holes is electrically connected to one corresponding conductive member.

Further, a plurality of protrusions are arranged at each end of the conductive carrier, the elastic apparatus is snap-fitted in the protrusions at the one end of the conductive carrier, the elastic apparatus is connected to the conductive base, the position limiting apparatus is snap-fitted in in the protrusions at the other end of the conductive carrier, and the position limiting apparatus is connected to the one end of the conductive shaft.

Further, the elastic apparatus includes a first rotary disk and a first elastic member, where a retaining slot is formed on the conductive base, the first rotary disk is snap-fitted in the protrusions at the one end of the conductive carrier, one end of the first elastic member is snap-fitted in the retaining slot, and the other end of the first elastic member is snap-fitted on the first rotary disk.

Further, the position limiting apparatus includes a second rotary disk, a gear, a swing arm, and a second elastic member, where the second rotary disk is snap-fitted in the protrusions at the other end of the conductive carrier, the second rotary disk is provided with a rotating tooth, one end of the swing arm abuts against the rotating tooth, the second elastic member is arranged at the other end of the swing arm, and the gear is arranged above the swing arm. Further, the swing arm includes a protruding lug, a first boss, a second boss, and a protruding post, where the protruding lug abuts against the rotating tooth, the second elastic member is arranged on the protruding post, the gear is arranged between the first boss and the second boss; depths of two adjacent tooth grooves of the gear are different, which are designated as a first tooth groove and a second tooth groove, the first tooth groove is meshed with the first boss, and the second tooth groove is meshed with the second boss.

Further, the rotating conductive apparatus further includes a housing, a plurality of columns are arranged on an inner wall of the housing, and each column extends through the corresponding gear, the swing arm, and the second elastic member.

The present invention further discloses a power socket, including the above rotating conductive apparatus, a socket panel, a socket housing connected to the socket panel, and a circuit assembly disposed in the socket housing, where the rotating conductive apparatus is electrically connected to the circuit assembly.

The present invention has the beneficial effects:
In the rotating conductive apparatus, the conductive assembly comprises a conductive shaft, a conductive carrier and a conductive base. A current first flows through the conductive base, the conductive base then electrifies the conductive shaft, the conductive shaft then transmits the current to the conductive carrier, and the conductive carrier can rotate around the conductive shaft. The wire is electrically connected to the conductive carrier, the wire rotates around the conductive shaft by means of the conductive carrier to achieve winding, and the conductive carrier can stably input and output the current to the wire. Compared with structures of follow-up circuit boards and conductive plates, the structural hardness of the conductive shaft is higher than that of a fixed circuit board, and the bearable contact friction force between the conductive shaft and the conductive carrier is greater than the bearable contact friction force between a circular conductive rail and a metal contact member, thereby effectively prolonging service life of products. Due to the design of the conductive base 13, when the rotating conductive apparatus is damaged, the conductive base may be directly separated from the power socket, which makes the rotating conductive apparatus easy to be replaced, ensures more stable current input and output to the conductive shaft, and reduces the difficulty of power supply test.

### BRIEF DESCRIPTION OF THE DRAWINGS

FIG. 1 is a schematic diagram of an exploded structure of a conductive assembly, an elastic apparatus, a position limiting apparatus and a wire of a rotating conductive apparatus according to the present invention.
FIG. 2 is a schematic diagram of an exploded structure of a conductive assembly and a clamping ring of a rotating conductive apparatus according to the present invention.

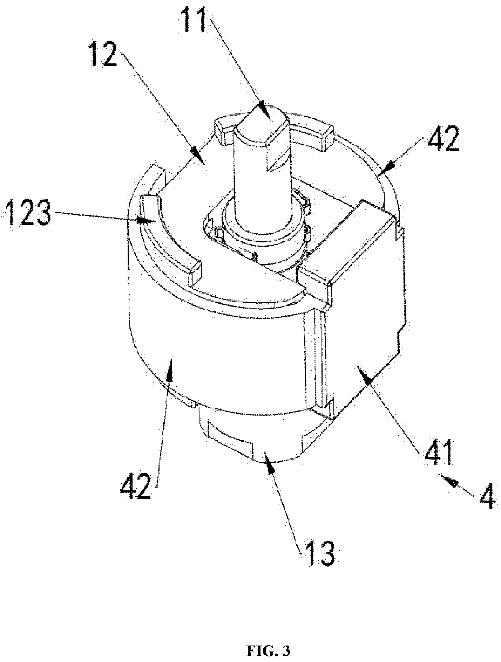

FIG. 3 is a schematic diagram of an assembly structure of a conductive assembly and a clamping ring of a rotating conductive apparatus according to the present invention.
FIG. 4 is a schematic diagram of an exploded structure of a conductive shaft, a conductive base and a conductive carrier of a rotating conductive apparatus according to the present invention.
FIG. 5 is a schematic diagram of an exploded structure of an electrical lead-out member and an insulating carrier of a rotating conductive apparatus according to the present invention.
FIG. 6 is a schematic diagram of connection principles of a conductive ring, a conductive wire and a conductive through hole of a rotating conductive apparatus according to the present invention.
FIG. 7 is a schematic diagram of an exploded structure of a conductive assembly, a first rotary disk and a second rotary disk of a rotating conductive apparatus according to the present invention.
FIG. 8 is a schematic structural diagram of a position limiting apparatus and a conductive shaft of a rotating conductive apparatus according to the present invention.
FIG. 9 is a schematic structural diagram of a swing arm and a second elastic member of a rotating conductive apparatus according to the present invention.
FIG. 10 is a schematic structural diagram of a gear of a rotating conductive apparatus according to the present invention.
FIG. 11 is a schematic structural diagram of mounting between a gear, a swing arm, a second elastic member and a housing of a rotating conductive apparatus according to the present invention.
FIG. 12 is a schematic diagram of an exploded structure of a power socket according to the present invention.

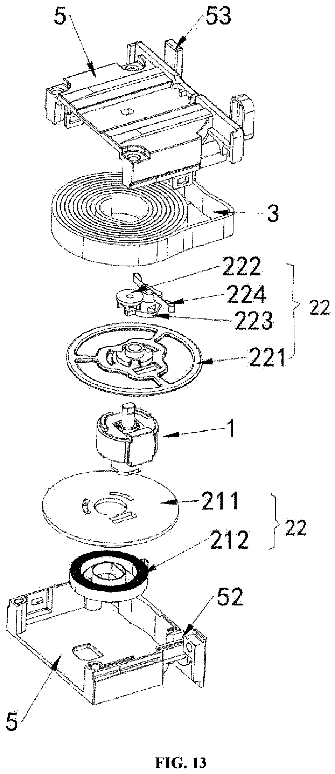

FIG. 13 is a schematic diagram of an exploded structure of a rotating conductive apparatus according to the present invention.
FIG. 14 is a schematic diagram of an overall structure of a rotating conductive apparatus according to the present invention.

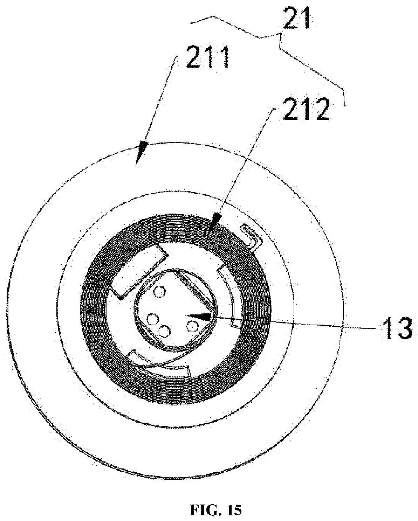

FIG. 15 is a schematic structural diagram of an elastic apparatus and a conductive base of a rotating conductive apparatus according to the present invention.

Reference numerals in the accompanying drawings: 1. conductive assembly; 11. conductive shaft; 111. conductive member; 1111. conductive ring; 1112. conductive wire; 112. insulating shaft; 12. conductive carrier; 121. electrical lead-out member; 1211. inner contact portion; 1212. outer contact portion; 122. insulating carrier; 1221. symmetrical slot; 1222. groove; 1223. receiving hole; 123. protrusion; 124. notch; 13. conductive base; 131. conductive through hole; 132. retaining slot; 2. winding assembly; 21. elastic apparatus; 211. first rotary disk; 212. first elastic member; 22. position limiting apparatus; 221. second rotary disk; 2211. rotating tooth; 2212. recess; 222. gear; 2221. first tooth groove; 2222. second tooth groove; 223. swing arm; 2231. protruding lug; 2232; first boss; 2233. second boss; 2234. protruding post; 224. second elastic member; 3. wire; 4. clamping ring; 41. end plug; 411. clamping block; 42. embracing arm; 5. housing; 51. column; 52. wire outlet; and 53. magnetic element.

### DETAILED DESCRIPTION OF EMBODIMENTS

In order to make the technical problems, technical solutions and beneficial effects of the present invention clearer, the present invention will be further described in detail below in conjunction with the drawings and embodiments. It should be understood that particular embodiments described herein are merely illustrative of the present invention, and are not intended to limit the present invention.

It should be noted that if an element is considered to be "mounting on", "arranged on", "covered on", "sleeved on" or "snap-fitted on" the other element, it means that the element may be directly on the other element or indirectly on the other element.

It should be understood that in the description of the present invention, "plurality" means two or more, unless expressly specified otherwise.

In addition, terms "inside", "upper", "between", "two sides", "one side", "top", "bottom" and "side edge", etc. are based on the orientations or positional relationships shown in the accompanying drawings and are merely for facilitating the description of the present invention and simplifying the description, rather than indicating or implying that a device or an element referred to must have a particular orientation or be constructed and operated in a particular orientation, and thus will not be interpreted as limiting the present invention.

It should be noted that the terms "first", "second" and "third" are merely for the purpose of description, and cannot be construed as indicating or implying relative importance or implicitly specifying the number of technical features indicated. Thus, features defined by "first", "second" and "third" may explicitly or implicitly include one or more of the features. It should be noted that the term "and/or" represents merely an association relationship describing associated objects, indicating that there may be three types of relationships, for example, A and/or B, which means three types of situation, that is, the existence of A alone, the existence of both A and B, and the existence of B alone. A and B may each be singular or plural.

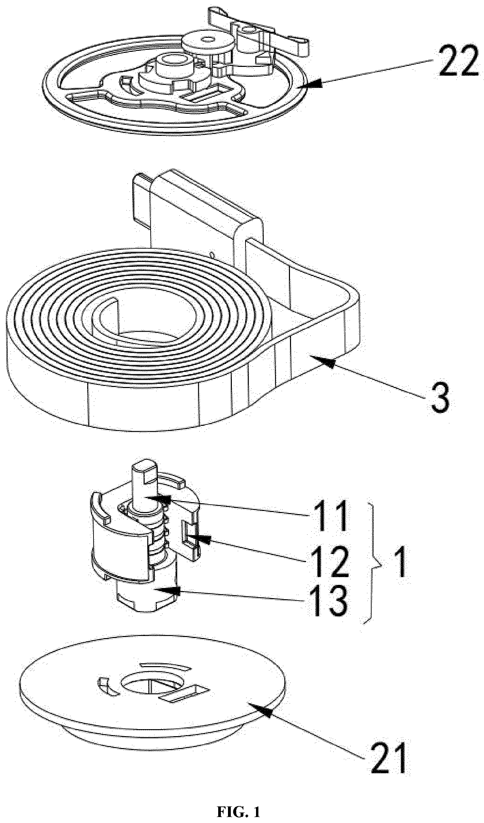

Referring to FIG. 1, the present invention provides a rotating conductive apparatus, including a conductive assembly 1, an elastic apparatus 21, a position limiting apparatus 22 and a wire 3, an end portion of the wire 3 is electrically connected to the conductive assembly 1. As shown in FIG. 1, the wire has two ends, one end of the wire does not has a connector, specifically, the end without the interface is electrically connected to the conductive assembly 1; and the other end of the wire has a connector, the connector may be one or a combination of a MicroUSB connector, a Type-C connector, and a Lightning connector, especially when a plurality of connectors are used, a retractable data cable may simultaneously charge a plurality of external devices, thereby greatly improving the practicality of the retractable data cable. Each end of the conductive assembly 1 is provided with a winding assembly 2.

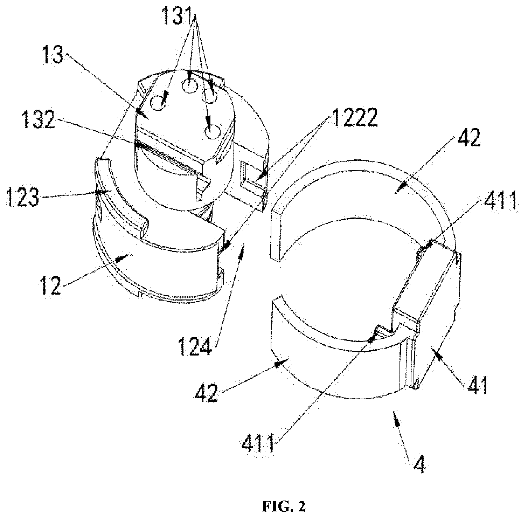

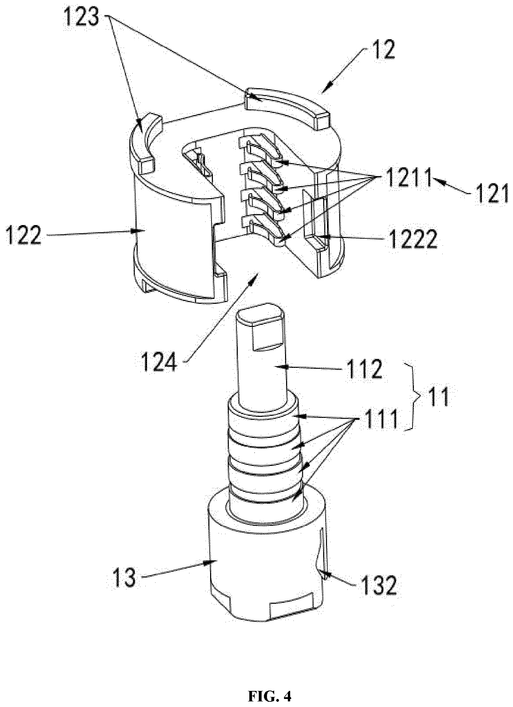

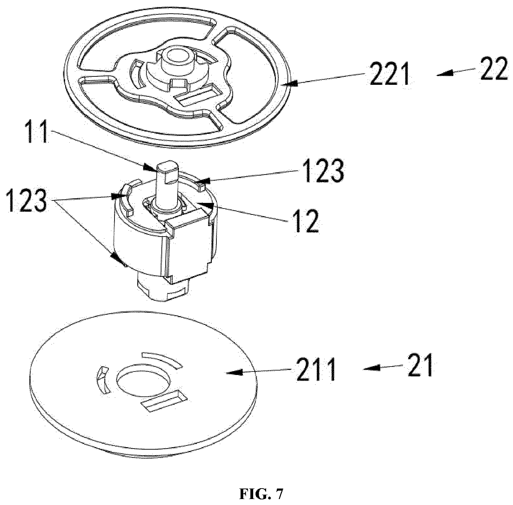

Referring to FIG. 4, the conductive assembly 1 includes a conductive shaft 11, a conductive carrier 12, and a conductive base 13, where one end of the conductive shaft 11 is fixedly connected to the conductive base 13, the other end of the conductive shaft 11 is connected to a winding assembly 2, the conductive carrier 12 is rotatably mounted on the conductive shaft 11, the conductive carrier 12 is electrically connected to the conductive shaft 11, the conductive carrier 12 is located on one side of the conductive base 13, the end portion of the wire 3 is electrically connected to the conductive carrier 12, and the winding assembly 2 is further snap-fitted on both ends of the conductive carrier 12. As shown in FIG. 1, the conductive base 13 is located below the conductive carrier 12, a current first flows from the conductive base 13 into the conductive shaft 11, and the conductive shaft 11 then transmits the current to the conductive carrier 12. Even when the conductive carrier 12 continuously rotates or rotates around the conductive shaft 11, a stable current can still flow through the conductive carrier 12, thereby ensuring stable input and output of current to the wire 3. Specifically, referring to FIG. 4, the conductive shaft 11 includes four conductive members 111 and an insulating shaft 112, where one end of each of the four conductive members 111 is disposed at intervals in an axial direction of the insulating shaft 112, the conductive members 111 located on a surface of the insulating shaft 112 is annular in shape, and one end of each conductive member 111 may be designated as a conductive ring 1111; the other end of each conductive member 111 penetrates into a shaft core of the insulating shaft 112 and extends axially to a tail end of the insulating shaft 112, and the other end of each conductive member 111 may be designated as a conductive wire 1112; the tail end of the insulating shaft 112 is defined relative to other components; referring to FIG. 2, the tail end of the insulating shaft 112 refers to a portion that is connected to the conductive base 13, or in other words, a portion connected to a power supply; in addition, the conductive shaft 11 and the conductive base 13 may be formed as an integral structure. In an alternative embodiment, the conductive base 13 may be omitted, as long as the conductive members 111 are electrically connected to the power supply; the four conductive members 111 are respectively connected to a live wire, a ground wire, and signal wires, where the signal wires include a first signal wire and a second signal wire for transmitting different communication protocols. Since existing data cables are divided into fast-charging cables and standard-charging cables. An extra protocol signal wire is incorporated into the fast-charging cable. With the advancement of technology, ultra-fast-charging cables may emerge, even more additional signal wires may be incorporated therein, a number of the conductive members 111 may be adjusted according to specific design requirements; and

referring to FIG. 2, the conductive base 13 is provided with four conductive through holes 131, each conductive through hole 131 is electrically connected to one corresponding conductive member 111; specifically, referring to FIG. 7, each conductive through hole 131 is electrically connected to one corresponding conductive wire 1112; and a structural design of the conductive base 13 is similar to the existing power plug named Cannon plug. By inserting a power plug into the conductive through holes 131 or connecting a power cord to the conductive through holes 131, the conductive base 13 can be powered. Due to the design of the conductive base 13, when the rotating conductive apparatus is damaged, the conductive base 13 may be directly separated from a power socket, which is simple to disassemble and makes the rotating conductive apparatus easy to be replaced. Compared with the method that the wires are connected to the conductive rings separately, the method that the metal plug inserted directly into the conductive through holes 131 ensures more stable current input and output to the conductive shaft 11. In addition, a probe of a current multimeter may be directly inserted into the conductive through holes 131 to test whether the conductive base can conduct electricity properly, which greatly reduces the difficulty of conductive test. Correspondingly, the four conductive through holes 131 are respectively connected to a live wire, a ground wire, and signal wires, where the signal wires include a first signal wire and a second signal wire for transmitting different communication protocols. Since existing data cables are divided into fast-charging cables and standard-charging cables. Therefore, the function of the conductive base 13 is to better conduct power to the conductive shaft 11, making the power supply connection more convenient and the current transmission more stable. In addition, when a plurality of the signal wires are required, a number of the conductive members 111 and the conductive through holes 131 may be increased accordingly.

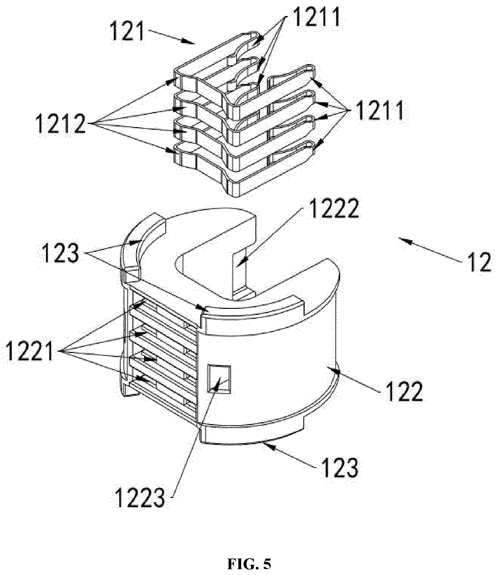

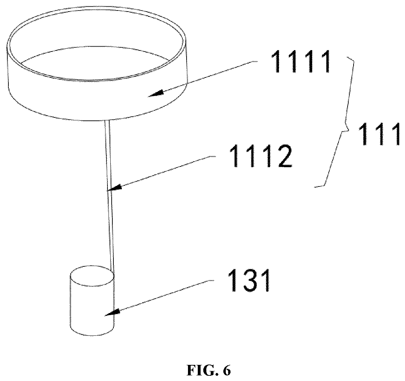

Referring to FIGs. 5 and 6, the conductive carrier 12 includes four electrical lead-out members 121 and an insulating carrier 122, where the four electrical lead-out members 121 are disposed at intervals in an axial direction of the insulating carrier 122, and each electrical lead-out member 121 is in electrical contact with one corresponding conductive member 111; a plurality of symmetrical slots 1221 are formed on the insulating carrier 122, each electrical lead-out member 121 is disposed in one corresponding symmetrical slot 1221, each electrical lead-out member 121 on the symmetrical slot 1221 includes two parts, or the symmetrical slot 1221 divides the electrical lead-out member 121 into two portions, that is, an inner contact portion 1211 and an outer contact portion 1212, where the inner contact portion 1211 is located on an inner wall of the insulating carrier 122, the inner contact portion 1211 is in electrical contact with the conductive member 111, the outer contact portion 1212 is located on an outer wall of the insulating carrier 122, and the end portion of the wire 3 is electrically connected to the outer contact portion 1212. Therefore, the function of the symmetrical slot 1221 is divide the electrical lead-out member 121 into two portions, one portion of the electrical lead-out member 121 is connected to the conductive shaft 11, that is, the inner contact portion 1211 is in electrical contact with the conductive member 111 of the conductive shaft 11; the other portion of the electrical lead-out member 121 is connected to the wire 3, that is, the outer contact portion 1212 is connected to the wire 3, and the wire 3 may rotate or rotate together with the conductive carrier 12, and the wire is wound around the conductive carrier 12; and a receiving hole 1223 is formed on the insulating carrier 122, the receiving hole 1223 is located on an outer wall of the insulating carrier 122, glue or fixing adhesive is placed in the receiving hole 1223, and the wire 3 is further fixed by the glue or fixing adhesive.

The current flows from the conductive base 13 into the conductive shaft 11, the conductive members 111 on the conductive shaft 11 transmit the current to the electrical lead-out members 121 of the conductive carrier 12, and the electrical lead-out members 121 transfer the current to the wire 3 connected thereto, such that the conductive carrier 12 can achieve stable current input and output while rotating. Since structural hardness of the conductive shaft 11 is higher than that of a fixed circuit board, and bearable contact friction force between the conductive shaft 11 and the conductive carrier 12 is greater than bearable contact friction force between a circular conductive rail and a metal contact member, thereby effectively prolonging the service life of products.

The conductive carrier 12 shown in FIG. 4 is similar to an existing pancake-shaped weight and is provided with a notch 124 to facilitate the installation of the conductive carrier 12 on the conductive shaft 11, and the electrical lead-out members 121 and the insulating carrier 122 are an integrated structure;
further, in order to prevent the conductive carrier 12 from being disengaged from the conductive shaft 11 and to make the connection between them more secure, as well as limiting a path of the wire winding, a clamping ring 4 is provided. The clamping ring 4 is detachably mounted on the conductive carrier 12, the clamping ring 4 is provided with a clamping block 411, a groove 1222 is formed on the conductive carrier 12, and the clamping block 411 is snap-fitted in the groove 1222. Specifically, the clamping ring 4 includes an end plug 41 and embracing arms 42 disposed on both sides of the end plug 41, the clamping block 41 is disposed on the end plug 41, the end plug 41 is configured to seal the notch 124 of the conductive carrier 12, the embracing arms 42 are configured to encircle a periphery of the conductive carrier 12, the embracing arms 42 are exposed a part of the outer contact portion 1212, the wire 3 extends outward from the conductive carrier 12 along a gap, and the wire 3 is wound around the clamping ring 4.

### Experimental test:

Five rotating conductive apparatuses according to the present invention were taken for test. Each apparatus was operated by pulling out the wire and holding for a while, the wire was then pulled to make it retracted, and a mobile device was checked to determine whether it remained in a charging state. The pull-and-retract operation was repeated continuously, where each pulling out and each retraction were taken as one action, and the operation was stopped only when the power to the mobile device was disconnected, where the power disconnection means that that the wire was no longer supplying power. A total number of pulling out was then recorded. Statistical results showed that 50,000 actions could be made for each of the five rotating conductive apparatuses before the rotating conductive apparatus were damaged.

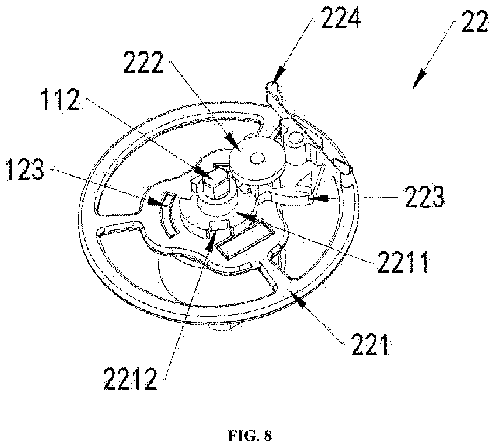

Next, referring to FIGs. 7-11, description will be focused on structural principles of the elastic apparatus 21 and the position limiting apparatus 22, as well as how to achieve the connection between the conductive assembly 1, after being incorporated and the elastic apparatus 21, and between the conductive assembly and the position limiting apparatus 22. The elastic apparatus 21 and the position limiting apparatus 22 are configured to achieve automatic retraction of the wire 3, and limit different lengths of extension of the wire 3. In addition, the elastic apparatus 21 and the position limiting apparatus 22 may be taken as the winding assembly 2.

The winding assembly 2 includes the elastic apparatus 21 and the position limiting apparatus 22, where two protrusions 123 are arranged at each end of the conductive carrier 12. Specifically, a total of four protrusions 123 are arranged on the insulating carrier 122, the insulating carrier 122 has two end face, one end face is provided with two protrusions 123, and the other end face is also provided with two protrusions 123, the elastic apparatus 21 is snap-fitted in the two protrusions 123 at the one end face of the conductive carrier 12, the elastic apparatus 21 is connected to the conductive base 13, the position limiting apparatus 22 is snap-fitted in the two protrusions 123 at the other one end face of the conductive carrier 12, the position limiting apparatus 22 is connected to one end of the conductive shaft 11, and the two protrusions 123 on the two end faces are symmetrically arranged to improve the aesthetics of the structure.

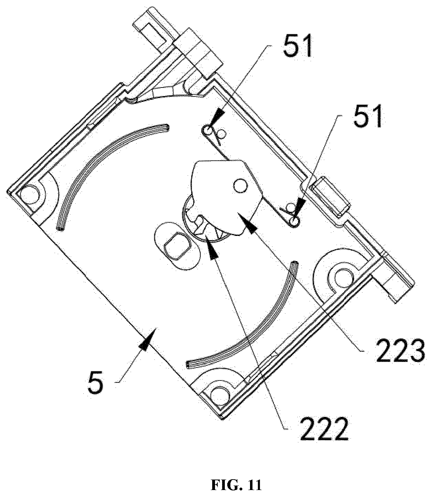

Specifically, the elastic apparatus 21 includes a first rotary disk 211 and a first elastic member 212, a retaining slot 132 is formed on the conductive base 13, the first rotary disk 211 is snap-fitted in the protrusions 123 at the one end of the conductive carrier 12, one end of the first elastic member 212 is snap-fitted in the retaining slot 132, and the other end of the first elastic member 212 is snap-fitted on the first rotary disk 211. Referring to FIG. 11, the first rotary disk 211 is provided with holes shaped to match the protrusions 123 and the end plug 41, and the protrusions 123 and the end plug 41 may be stuck in the holes of the first rotary disk 211; an L-shaped slot is further formed on the first rotary disk 211, and the other end of the first elastic member 212 is snap-fitted in the L-shaped slot; the first elastic member 212 is a spiral torsion spring, when the first rotary disk 211 rotates, the spiral torsion spring can provide restoring force to the first rotary disk 211, such that the first rotary disk 211 has a tendency to return to its original position; of course, the first elastic member 212 may also be an elastic element, such as an elastic block, as long as it is capable of providing restoring force to return the first rotary disk 211 to its original position during rotation when the first rotary disk 211 rotates.

Therefore, the function of the elastic apparatus 21 is to provide the restoring force to the wire 3, so as to realize automatic rewinding of the wire 3.

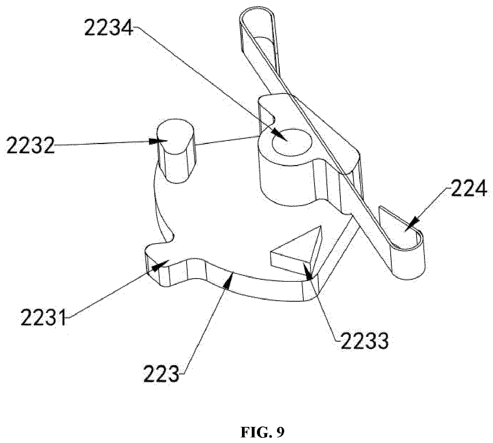

Specifically, the position limiting apparatus 22 includes a second rotary disk 221, a gear 222, a swing arm 223, and a second elastic member 224, where the second rotary disk 221 is snap-fitted in the boss 123 at the other end of the conductive carrier 12, the second rotary disk 221 is provided with a rotating tooth 2211, one end of the swing arm 223 abuts against the rotating tooth 2211, the second elastic member 224 is arranged at the other end of the swing arm 223, and the gear 222 is arranged above the swing arm 223. Referring to FIGs. 9 and 11, the rotating tooth 2211 is provided with three recesses 2212, and one end of the swing arm 223 abuts against the recesses 2212 on the rotating tooth 2211; the second rotary disk 221 is also provided with holes shaped to match the boss 123 and the end plug 41, and the boss 123 and the end plug 41 may be stuck in the holes of the second rotary disk 221; and a circular hole is formed in a center of the second rotary disk 221, and the other end of the conductive shaft 11 extends through the circular hole.

It is worth noting that the purpose of the above structural design is to enable the conductive carrier 12 to drive the winding assembly 2 to rotate in unison. Specifically, when the wire 3 is pulled out or the wire 3 is automatically rewound, the conductive carrier 12 drives the first rotary disk 211 and the second rotary disk 221 to rotate in unison; and the swing arm 223 rotates along with the rotating tooth 2211, the gear 222 is driven to rotate by the swing arm 223, the second elastic member 224 enables the swing arm 223 to return its original position, the second elastic member 224 may be a spring or an elastic sheet, and a middle portion of the elastic sheet has elastic effect.

Further, the swing arm 223 includes a protruding lug 2231, a first boss 2232, a second boss 2233, and a protruding post 2234, where the protruding lug 2231 abuts against the recesses 2212 of the rotating tooth 2211, the second elastic member 224 is arranged on the protruding post 2234, and the gear 222 is arranged between the first boss 2232 and the second boss 2233.

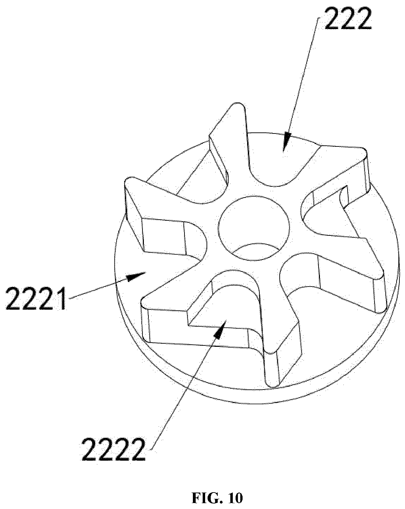

Further, referring to FIG. 10, depths of two adjacent tooth grooves of the gear 222 are different, designated as a first tooth groove 2221 and a second tooth groove 2222, the first tooth groove 2221 is meshed with the first boss 2232, and the second tooth groove 2222 is meshed with the second boss 2233; a number of the first tooth groove 2221and the second tooth groove 2222 are both three, a depth of the first tooth groove 2221 is greater than that of the second tooth groove 2222, which enables the wire to be stretched outward for three gears to meet different needs of a user for varying wire lengths.

Further, the rotating conductive apparatus also includes a housing 5, where a plurality of columns 51 are arranged on an inner wall of the housing 5. Referring to FIG. 11, each column 51 extends through the corresponding gear 222, the swing arm 223, and the second elastic member 224, both ends of the second elastic member 224 are bent into two circles, and the column 51 are inserted into the two circles 51; when rotating, the gear 222 rotates around the column inserted therein as an axis; and the protruding lug 2231 of the swing arm 223 drives the swing arm 223 to rotate around the column 51 inserted therein as an axis. In summary, the function of the columns 51 is to fix the second elastic member 224, the swing arm 223, and the gear 222.

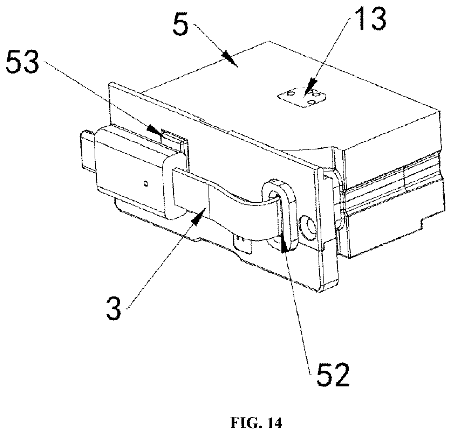

Further, referring to FIG. 14, the housing 5 is further provided with a wire outlet 52, one end of the wire 3 provided with the MicroUSB connector, the Type-C connector, or the Lightning connector is exposed outside the wire outlet 52, and the wire 3 may be retracted from the wire outlet 52; and the housing 5 is further provided with an magnetic element 53, which may be a magnet, and the MicroUSB connector, the Type-C connector, or the Lightning connector is attracted by the magnet.

When the user needs to pull out the wire for charging, the user pulls the end of the wire 3 provided with the MicroUSB connector, the Type-C connector, or the Lightning connector, the rotating tooth 2211 on the second rotary disk 221 connected to the conductive carrier 12 rotates, the protruding lug 2231 on the swing arm 223 is disengaged from the original recess 2212 and causes the swing arm 223 to deviate from its original position, and the second elastic member 224 applies restoring force to the swing arm 223 at the same time. When the user releases the wire, the first elastic member 212 in the first rotary disk 211 returns to its original position, the first rotary disk 211 and the second rotary disk 221 are driven to rotate together, and the retracted wire 3 is partially retracted. However, since the second elastic member 224 drives the swing arm 223 to return to its original position, the protruding lug 2231 on the swing arm 223 is engaged with the second tooth groove 2222 of the gear 222, and the swing arm 223 is fixed. Further, the protruding lug 2231 of the swing arm 223 swings by a certain angle, the protruding lug 2231 comes to rest inside the recess 2212 on the rotating tooth 2211, such that the second rotary disk 221 stops rotating, the first rotary disk 211 at the other end of the conductive carrier 12 also stops rotating, thereby achieving a positioning role.

When the user needs to retract the wire 3 and stop charging, the user pulls again the end of the wire provided with the MicroUSB connector, the Type-C connector, or the Lightning connector, the rotating tooth 2211 on the second rotary disk 221 connected to the conductive carrier 12 rotates again, the protruding lug 2231 on the swing arm 223 is disengaged from the recess 2212 again and causes the swing arm 223 to deviate from its original position again, and the second elastic member 224 provides restoring force to the swing arm at the same time. When the user releases the wire, the first elastic member 212 returns to its original position, and the second elastic member 212 drives the swing arm 223 to return to its original position at the same time, the protruding lug 2231 on the swing arm 223 is engaged with the first tooth groove 2221 of the gear 222, and the swing arm 223 is fixed. Furthermore, since the depth of the first tooth groove 2221 is greater than that of the second tooth groove 2222, when the swing arm 223 is fixed, an angle by which the protruding lug 2231 on the swing arm 223 swings is greater than an angle by which the protruding lug 2231 swings when the wire 3 is pulled out, and the protruding lug 2231 comes to rest outside the recess 2212 of the rotating tooth 2211 and cannot prevent the rotation of the first rotary disk 211 and the second rotary disk 221 from rotating. Finally, under the action of the first elastic member 212, the stretched wire 3 is fully retracted, achieving the function of one-time wire retraction, which is simple and convenient, and improves operational efficiency.

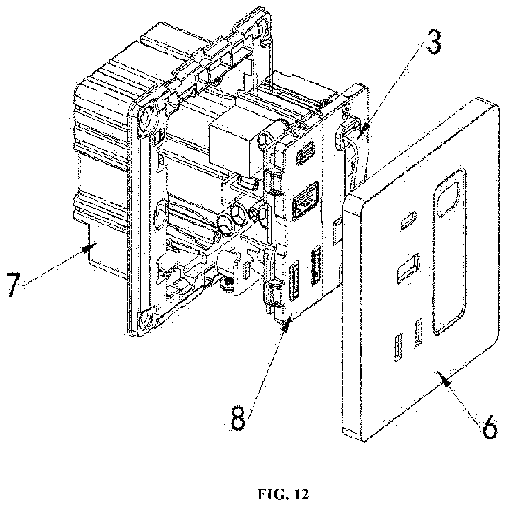

The present invention also discloses a power socket, as shown in FIG. 12, including the abovementioned retractable data cable, a socket panel 6, a socket housing 7 connected to the socket panel 6, and a circuit assembly 8 disposed in the socket housing 7, where the retractable data cable is electrically connected to the circuit assembly 8.

In addition, the present invention may also be applied to travel chargers and car chargers.

The embodiments mentioned above are merely one embodiment of the present invention, and are specifically described in details, but cannot be interpreted as limiting the scope of the patent for the present invention as a result. It shall be noted that for those of ordinarily skilled in the art, they may make several transformations and improvements on the premise without deviating from concepts of the present invention, these transformations and improvements should be considered to fall within the protection scope of the present invention. Hence, the protection scope of the patent for the present invention should be subject to the appended claims.

## Claims

1. A rotating conductive apparatus, **characterized by** comprising:
a conductive assembly (1), **characterized in that** the conductive assembly (1) comprises a conductive shaft (11), a conductive carrier (12) and a conductive base (13), **characterized in that** one end of the conductive shaft (11) is fixedly connected to the conductive base (13), the conductive carrier (12) is rotatably mounted on the conductive shaft (11), and the conductive carrier (12) is electrically connected to the conductive shaft (11);
an elastic apparatus (21), **characterized in that** the elastic apparatus (21) is connected to the conductive base (13), and the elastic apparatus (21) is snap-fitted on one end of the conductive carrier (12);
a position limiting apparatus (22), **characterized in that** the other end of the conductive shaft (11) is connected to the position limiting apparatus (22), and the position limiting apparatus (22) is snap-fitted on the other end of the conductive carrier (12); and
a wire (3), **characterized in that** one end portion of the wire (3) is electrically connected to the conductive carrier (12), the wire (3) is wound around the conductive carrier (12), and the wire (3) is located between the elastic apparatus (21) and the position limiting apparatus (22).

2. The rotating conductive apparatus according to claim 1, **characterized by** further comprising a clamping ring (4), **characterized in that** the clamping ring (4) is detachably mounted on the conductive carrier (12), the clamping ring (4) is provided with a clamping block (411), a groove (1222) is formed on the conductive carrier (12), and the clamping block (411) is snap-fitted in the groove (1222).

3. The rotating conductive apparatus according to claim 2, **characterized in that** the conductive shaft (11) comprises a plurality of conductive members (111) and an insulating shaft (112), one end of each of the conductive members (111) is disposed at intervals in an axial direction of the insulating shaft (112), and the other end of each of the conductive members (111) penetrates into a shaft core of the insulating shaft (112), and extends axially to a tail end of the insulating shaft (112) to connect to the conductive base (13); the conductive carrier (12) comprises a plurality of electrical lead-out members (121) and an insulating carrier (122), **characterized in that** the plurality of electrical lead-out members (121) are disposed at intervals in an axial direction of the insulating carrier (122), and each electrical lead-out member (121) is in electrical contact with one corresponding conductive member (111); and a plurality of symmetrical slots (1221) are formed on the insulating carrier (122), each electrical lead-out member (121) is disposed in one corresponding symmetrical slot (1221), the symmetrical slot (1221) divides each electrical lead-out member (121) into an inner contact portion (1211) and an outer contact portion (1212), the inner contact portion (1211) is located on an inner wall of the insulating carrier (122), the inner contact portion (1211) is in electrical contact with the conductive member (111), the outer contact portion (1212) is located on an outer wall of the insulating carrier (122), and the end portion of the wire (3) is electrically connected to the outer contact portion (1212).

4. The rotating conductive apparatus according to claim 3, **characterized in that** the conductive base (3) is provided with a plurality of conductive through holes (131), and each conductive through hole (131) is electrically connected to one corresponding conductive member (111).

5. The rotating conductive apparatus according to claim 2, **characterized in that** a plurality of protrusions (123) are arranged at each end of the conductive carrier (12), the elastic apparatus (21) is snap-fitted in the protrusions (123) at the one end of the conductive carrier (12), the elastic apparatus (21) is connected to the conductive base (13), the position limiting apparatus (22) is snap-fitted in in the protrusions (123) at the other end of the conductive carrier (12), and the position limiting apparatus (22) is connected to the one end of the conductive shaft (11).

6. The rotating conductive apparatus according to claim 5, **characterized in that** the elastic apparatus (21) comprises a first rotary disk (211) and a first elastic member (212), a retaining slot (132) is formed on the conductive base (13), the first rotary disk (211) is snap-fitted in the protrusions (123) at the one end of the conductive carrier (12), one end of the first elastic member (212) is snap-fitted in the retaining slot (132), and the other end of the first elastic member (212) is snap-fitted on the first rotary disk (211).

7. The rotating conductive apparatus according to claim 6 **characterized in that** the position limiting apparatus (22) comprises a second rotary disk (221), a gear (222), a swing arm (223), and a second elastic member (224), **characterized in that** the second rotary disk (221) is snap-fitted in the protrusions (123) at the other end of the conductive carrier (12), the second rotary disk (221) is provided with a rotating tooth (2211), one end of the swing arm (223) abuts against the rotating tooth (2211), the second elastic member (224) is arranged at the other end of the swing arm (223), and the gear (222) is arranged above the swing arm (223).

8. The rotating conductive apparatus according to claim 7, **characterized in that** the swing arm (223) comprises a protruding lug (2231), a first boss (2232), a second boss (2233), and a protruding post (2234), **characterized in that** the protruding lug (2231) abuts against the rotating tooth (2211), the second elastic member (224) is arranged on the protruding post (2234), the gear (222) is arranged between the first boss (2232) and the second boss (2234); depths of two adjacent tooth grooves of the gear (222) are different, and the two tooth grooves are designated as a first tooth groove (2221) and a second tooth groove (2222), **characterized in that** the first tooth groove (2221) is meshed with the first boss (2232), and the second tooth groove (2221) is meshed with the second boss (2233).

9. The rotating conductive apparatus according to claim 8, further **characterized by** comprising a housing (5), **characterized in that** a plurality of columns (51) are arranged on an inner wall of the housing (5), and each column (51) extends through the corresponding gear (222), the swing arm (223), and the second elastic member (224).

10. A power socket, **characterized by** comprising the rotating conductive apparatus according to any one of claims 1-9, a socket panel (6), a socket housing (7) connected to the socket panel (6), and a circuit assembly (8) disposed in the socket housing (7), **characterized in that** the rotating conductive apparatus is electrically connected to the circuit assembly (8).

## Amended claims

### Amended claims under Art. 19.1 PCT

1. A rotating conductive apparatus, comprising:
a conductive assembly (1), comprising a conductive shaft (11), a conductive carrier (12) and a conductive base (13); wherein one end of the conductive shaft (11) is fixedly connected to the conductive base (13), the conductive carrier (12) is rotatably mounted on the conductive shaft (11), and the conductive carrier (12) is electrically connected to the conductive shaft (11);
an elastic apparatus (21), wherein the elastic apparatus (21) is connected to the conductive base (13), and the elastic apparatus (21) is snap-fitted on one end of the conductive carrier (12);
a position limiting apparatus (22), wherein another end of the conductive shaft (11) is connected to the position limiting apparatus (22), and the position limiting apparatus (22) is snap-fitted on another end of the conductive carrier (12);
a wire (3), wherein one end portion of the wire (3) is electrically connected to the conductive carrier (12), the wire (3) is wound around the conductive carrier (12), and the wire (3) is located between the elastic apparatus (21) and the position limiting apparatus (22); and
a clamping ring (4), wherein the clamping ring (4) is detachably mounted on the conductive carrier (12), the clamping ring (4) is provided with a clamping block (411), a groove (1222) is formed on the conductive carrier (12), and the clamping block (411) is snap-fitted in the groove (1222).

2. The rotating conductive apparatus according to claim 1, wherein the conductive shaft (11) comprises a plurality of conductive members (111) and an insulating shaft (112), one end of each of the conductive members (111) is disposed at intervals in an axial direction of the insulating shaft (112), and another end of each of the conductive members (111) penetrates into a shaft core of the insulating shaft (112), and extends axially to a tail end of the insulating shaft (112) to connect to the conductive base (13);
wherein the conductive carrier (12) comprises a plurality of electrical lead-out members (121) and an insulating carrier (122), the plurality of electrical lead-out members (121) are disposed at intervals in an axial direction of the insulating carrier (122), and each electrical lead-out member (121) is in electrical contact with one corresponding conductive member (111); and
wherein a plurality of symmetrical slots (1221) are formed on the insulating carrier (122), the each electrical lead-out member (121) is disposed in one corresponding symmetrical slot (1221), the symmetrical slot (1221) divides each electrical lead-out member (121) into an inner contact portion (1211) and an outer contact portion (1212), the inner contact portion (1211) is located on an inner wall of the insulating carrier (122), the inner contact portion (1211) is in electrical contact with the conductive member (111), the outer contact portion (1212) is located on an outer wall of the insulating carrier (122), and the end portion of the wire (3) is electrically connected to the outer contact portion (1212).

3. The rotating conductive apparatus according to claim 2, wherein the conductive base (3) is provided with a plurality of conductive through holes (131), and each conductive through hole (131) is electrically connected to the one corresponding conductive member (111).

4. The rotating conductive apparatus according to claim 1, wherein a plurality of protrusions (123) are arranged at each end of the conductive carrier (12), the elastic apparatus (21) is snap-fitted in the protrusions (123) at the one end of the conductive carrier (12), the elastic apparatus (21) is connected to the conductive base (13), the position limiting apparatus (22) is snap-fitted in the protrusions (123) at another end of the conductive carrier (12), and the position limiting apparatus (22) is connected to the one end of the conductive shaft (11).

5. The rotating conductive apparatus according to claim 4, wherein the elastic apparatus (21) comprises a first rotary disk (211) and a first elastic member (212), a retaining slot (132) is formed on the conductive base (13), the first rotary disk (211) is snap-fitted in the protrusions (123) at the one end of the conductive carrier (12), one end of the first elastic member (212) is snap-fitted in the retaining slot (132), and another end of the first elastic member (212) is snap-fitted on the first rotary disk (211).

6. The rotating conductive apparatus according to claim 5, wherein the position limiting apparatus (22) comprises a second rotary disk (221), a gear (222), a swing arm (223), and a second elastic member (224); wherein the second rotary disk (221) is snap-fitted in the protrusions (123) at another end of the conductive carrier (12), the second rotary disk (221) is provided with a rotating tooth (2211), one end of the swing arm (223) abuts against the rotating tooth (2211), the second elastic member (224) is arranged at another end of the swing arm (223), and the gear (222) is arranged above the swing arm (223).

7. The rotating conductive apparatus according to claim 6, wherein the swing arm (223) comprises a protruding lug (2231), a first boss (2232), a second boss (2233), and a protruding post (2234); wherein the protruding lug (2231) abuts against the rotating tooth (2211), the second elastic member (224) is arranged on the protruding post (2234), the gear (222) is arranged between the first boss (2232) and the second boss (2234); wherein depths of two adjacent tooth grooves of the gear (222) are different, and the two adjacent tooth grooves are designated as a first tooth groove (2221) and a second tooth groove (2222), the first tooth groove (2221) is meshed with the first boss (2232), and the second tooth groove (2221) is meshed with the second boss (2233).

8. The rotating conductive apparatus according to claim 7, wherein further comprises a housing (5), a plurality of columns (51) are arranged on an inner wall of the housing (5), and each column (51) extends through the corresponding gear (222), the swing arm (223), and the second elastic member (224).

9. A power socket, comprising the rotating conductive apparatus according to any one of claims 1-8, a socket panel (6), a socket housing (7) connected to the socket panel (6), and a circuit assembly (8) disposed in the socket housing (7); wherein the rotating conductive apparatus is electrically connected to the circuit assembly (8).
